(19) Europäisches Patentamt
European Patent Office
Office européen des brevets

(11) **EP 3 720 701 B1**

(12) **EUROPÄISCHE PATENTSCHRIFT**

(45) Veröffentlichungstag und Bekanntmachung des Hinweises auf die Patenterteilung:
**03.05.2023   Patentblatt 2023/18**

(21) Anmeldenummer: **18788741.9**

(22) Anmeldetag: **15.10.2018**

(51) Internationale Patentklassifikation (IPC):
**B32B 17/10** (2006.01)    **C03C 17/00** (2006.01)

(52) Gemeinsame Patentklassifikation (CPC):
**B32B 17/10036; B32B 17/1011; B32B 17/10174; B32B 17/10201; B32B 17/1022; B32B 17/10229; B32B 17/10431; B32B 17/10761; C03C 17/00**

(86) Internationale Anmeldenummer:
**PCT/EP2018/078077**

(87) Internationale Veröffentlichungsnummer:
**WO 2019/110172 (13.06.2019 Gazette 2019/24)**

(54) **VERBUNDSCHEIBE MIT SONNENSCHUTZBESCHICHTUNG UND WÄRMESTRAHLEN REFLEKTIERENDER BESCHICHTUNG**

LAMINATED GLASS PANE WITH SOLAR CONTROL COATING AND THERMAL RADIATION REFLECTIVE COATING

VITRE EN VERRE FEUILLETÉ AVEC REVÊTEMENT DE PROTECTION SOLAIRE ET REVÊTEMENT RÉFLÉCHISSANT LE RAYONNEMENT THERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA**

(30) Priorität: **05.12.2017   EP 17205439**

(43) Veröffentlichungstag der Anmeldung:
**14.10.2020   Patentblatt 2020/42**

(73) Patentinhaber: **SAINT-GOBAIN GLASS FRANCE**
**92400 Courbevoie (FR)**

(72) Erfinder:
• **HAGEN, Jan**
**53123 Bonn (DE)**
• **BESLER, Robert**
**52134 Herzogenrath (DE)**

• **SCHULZ, Valentin**
**52382 Niederzier (DE)**

(74) Vertreter: **Gebauer, Dieter Edmund**
**Splanemann**
**Patentanwälte Partnerschaft**
**Rumfordstraße 7**
**80469 München (DE)**

(56) Entgegenhaltungen:
| | |
|---|---|
| EP-A1- 2 090 428 | EP-A1- 2 167 436 |
| WO-A1-2006/043026 | WO-A1-2009/029466 |
| WO-A1-2013/127563 | WO-A1-2013/131667 |
| DE-C1- 19 927 683 | US-A1- 2006 182 980 |
| US-A1- 2009 046 355 | US-A1- 2010 165 436 |
| US-A1- 2015 151 675 | US-A1- 2015 165 965 |
| US-A1- 2016 002 100 | |

**Beschreibung**

Die Erfindung betrifft eine Verbundscheibe mit Sonnenschutzbeschichtung und Wärmestrahlen reflektierender Beschichtung sowie deren Verwendung.

Die DE 19927683 C1 offenbart eine Verbundglasscheibe aus wenigstens zwei Glasscheiben und einer diese verbindenden transparenten Verbundschicht und mit einer im wesentlichen Strahlen außerhalb des sichtbaren Spektrums der Sonnenstrahlung, insbesondere Infrarotstrahlen, reflektierenden Sonnenschutzschicht, dadurch gekennzeichnet, dass die Verbundglasscheibe auf ihrer zu einem Innenraum hinweisenden Oberfläche mit einer weiteren, von der Sonnenschutzschicht räumlich getrennten, transparenten, im wesentlichen Wärmestrahlen reflektierenden Beschichtung (Low-E-Schicht) versehen ist. Aufgabe der DE 19927683 C1 ist es, eine Verbundglasscheibe mit Sonnenschutzeigenschaften bereitzustellen, bei welcher bei geringen Außentemperaturen die Wärmeabsorption durch eine großflächige Verglasung aus dem Fahrzeuginnenraum stark verringert wird. Die Lichttransmission durch die Verbundscheibe beträgt beispielsweise 31 %.

Verglasungen wie sie in Sonnendächern und Schiebedächern eingesetzt werden, erfordern eine Lichttransmission zwischen 2 % und 10 % und einen spezifischen Sonnenschutz, charakterisiert durch den TTS-Wert, der ein Maß für die totale transmittierte Wärmestrahlung der Sonne durch die Scheibe darstellt, und beispielsweise gemäß der ISO 9050 gemessen wird. Bei einer höheren Lichttransmission wird zum einen zu viel Wärmestrahlung transmittiert und zum anderen können die Personen hinter der Verglasung durch zu viel Lichteintrag visuell gestört sein. Bei einer niedrigeren Lichttransmission ist die Verglasung insgesamt zu dunkel, sodass die Personen hinter der Verglasung nicht mehr durch diese hindurchsehen können.

Das Ziel ist daher ein möglichst geringer TTS-Wert in Kombination mit einer Lichttransmission von 2 bis 10 %, um den bestmöglichen Kompromiss zwischen der Sicht nach Außen durch das Dach hindurch und guten thermischen Eigenschaften sicherzustellen. Daher müssen ein geringes Strahlungsvermögen und IR-reflektierende, d.h. die Sonnenstrahlung kontrollierende, Funktionen in laminierten Sonnendächern und Schiebedächern kombiniert werden. IR-reflektierende, d.h. die Sonnenstrahlung kontrollierende, Funktionen werden durch auf Silber basierende Beschichtungen auf der Innenseite der Außenscheibe oder eine Polyethylenterephthalatfolie zwischen zwei Polyvinylbutyralfolien erreicht. Auf Silber basierende Beschichtungen weisen den intrinsischen Nachteil auf, dass die Reflektion im sichtbaren Bereich des Lichts mit mindestens 10 % relativ hoch ist. Diese Reflektion hat einen Einfluss auf die Reflektion, die innenraumseitig von Verglasung wahrgenommen wird. Lichtreflektionen von kleiner 6 %, bevorzugt von kleiner 4%, werden von den Fahrzeuginsassen nicht als störend empfunden. Selbst die Verwendung dunkel getönter Polyvinylbutyralfolien zwischen der sonnenkontrollierenden Beschichtung und der Innenscheibe kann diesen Einfluss nicht völlig ausgleichen und in Abhängigkeit von der Lichttransmission wird die Lichtreflexion von der Innenseite der Innenscheibe zunehmen. Diese Zunahme an Lichtreflexion wird von Fahrzeuginsassen, insbesondere denen auf den Rücksitzen, als Nachteil wahrgenommen werden, weil sich die Sichtverhältnisse durch das Sonnendach bzw. Schiebedach verschlechtern und optische Unannehmlichkeiten auftreten, z.B. durch starke Reflektion des Armaturenbrettes in dem Sonnendach bzw. Schiebedach

Diese Nachteile betreffen also auch Verbundglasscheiben, wie sie in der DE 19927683 C1 offenbart sind, in Sonnendächern und Schiebedächern.

WO2013/127563A1 offenbart eine weitere Verbundscheibe mit einer Sonnenschutzschicht zwischen den Glasscheiben und einer Low-E-Beschichtung auf der innenraumseitigen Oberfläche. Die Low-E-Beschichtung ist auf Basis von Niob, Tantal, Molybdän oder Zirkonium ausgebildet.

US 2015/165965 A1, US 2015/151675 A1 und EP 2090428 A1 offenbaren jeweils Verbundscheiben mit einer Low-E-Beschichtung.

Der Erfindung liegt die Aufgabe zu Grunde, über die erforderliche Spanne der bevorzugten Lichttransmission durch die Verbundscheibe von 2 bis 10 % eine auf der Innenseite der Innenscheibe wahrgenommene, konstante Lichtreflektion von unter 6 %, bevorzugt unter 4% zu erreichen. Eine weitere Aufgabe ist es, einen möglichst geringen TTS-Wert zu erreichen.

Erfindungsgemäß wird diese Aufgabe durch eine Verbundscheibe nach Anspruch 1 gelöst. Die erfindungsgemäße Verbundscheibe umfasst eine Außenscheibe mit einer außenseitigen Oberfläche und einer innenraumseitigen Oberfläche, eine Innenscheibe mit einer außenseitigen Oberfläche und einer innenraumseitigen Oberfläche und eine thermoplastische Zwischenschicht, welche die innenraumseitige Oberfläche der Außenscheibe mit der außenseitigen Oberfläche der Innenscheibe verbindet, wobei die Verbundscheibe zwischen der Außenscheibe und der Innenscheibe mindestens eine Sonnenschutzbeschichtung aufweist, welche im Wesentlichen Strahlen außerhalb des sichtbaren Spektrums der Sonnenstrahlung, insbesondere Infrarotstrahlen, reflektiert oder absorbiert, und wobei die Verbundglasscheibe auf der innenraumseitigen Oberfläche der Innenscheibe eine Wärmestrahlen reflektierende Beschichtung aufweist, wobei die Verbundscheibe einen Transmissionsindex A von 0,06 bis 0,08 aufweist, wobei der Transmissionsindex A (A-Wert) nach der folgenden Formel (I) bestimmt wird

$$A = TL_{Verbundglasscheibe}/(TL_{LowE-beschichtete\ Scheibe} * TE) \qquad (I),$$

wobei TL der Lichttransmissionsgrad, und TE die Energietransmission jeweils gemessen nach ISO 9050 ist.

$TL_{Verbundglasscheibe}$ bezeichnet die Lichttransmission durch die gesamte Verbundscheibe. $TL_{LowE-beschichtete\ Scheibe}$ bezeichnet die Lichttransmission durch die Innenscheibe samt Wärmestrahlen reflektierender Beschichtung. Die TL-Werte lassen sich durch die Wahl der Tönung der Bestandteile der Verbundscheibe, also der Innenscheibe, der Außenscheibe und der Zwischenschicht, geeignet einstellen. Der TE-Wert wird ebenfalls durch die Wahl der Tönung der Bestandteile der Verbundscheibe bestimmt und außerdem durch die Eigenschaften der Sonnenschutzbeschichtung und der Wärmestrahlen reflektierenden Beschichtung. Die entsprechenden Werte können vom Fachmann geeignet gewählt werden, um einen erfindungsgemäßen Transmissionsindex A zu erreichen.

Die Transmissionswerte lassen sich grundsätzlich auch nach anderen Normen bestimmen als der ISO 9050, wobei sich der Transmissionsindex A nur geringfügig ändert.

Überraschenderweise hat sich gezeigt, dass eine solche Verbundscheibe eine niedrige Lichttransmission von 1 bis 12%, bevorzugt von 2 bis 10% und gleichzeitig eine niedrige totale transmittierte Wärmestrahlung (TTS) von insbesondere weniger als 50%, bevorzugt weniger als 35%, besonders bevorzugt weniger als 25% (gemessen nach ISO 9050) aufweist, wobei die Lichtreflexion der Verbundglasscheibe weniger als 6%, insbesondere weniger als 4% beträgt.

Die Lichtreflexion bezieht sich hierbei auf die Reflexion unter Winkeln von 8°.

Damit erreicht nur ein kleiner Teil der einstrahlenden Sonnenstrahlung den Raum hinter der Scheibe, sodass zum einen ein vorteilhafter Sonnenschutz gewährleistet ist und zum anderen ein Aufheizen des Raums hinter der Verbundscheibe weitgehend verhindert wird, wobei gleichzeitig die Reflexion an der Innenseite der Innenscheibe auf ein Minimum reduziert werden kann.

Die Werte für die Lichttransmission (TL) und die Reflexion (RL) beziehen sich (wie für Automobilverglasungen üblich) auf die Lichtart A, d.h. den sichtbaren Anteil des Sonnenlichts bei einer Wellenlänge von 380 nm bis 780 nm. Als Strahlen, die im Wesentlichen Strahlen des sichtbaren Spektrums der Sonnenstrahlung sind, insbesondere Infrarotstrahlen, werden Strahlen einer Wellenlänge von größer als etwa 800 nm verstanden.

Der Transmissionsindex A beträgt 0,06 bis 0,08 und ganz besonders bevorzugt 0,07 bis 0,08.

Die Verbundscheibe ist dafür vorgesehen, in einer Fensteröffnung einen Innenraum, insbesondere den Innenraum eines Fahrzeugs, gegenüber der äußeren Umgebung abzutrennen. Die Verbundscheibe ist ein Laminat und umfasst eine erste und eine zweite Glasscheibe, die im Sinne der Erfindung als Außenscheibe und Innenscheibe bezeichnet werden und über eine thermoplastische Zwischenschicht miteinander verbunden sind. Mit Innenscheibe wird im Sinne der Erfindung die in Einbaulage dem Innenraum zugewandte Scheibe bezeichnet. Mit Außenscheibe wird die in Einbaulage der äußeren Umgebung zugewandte Scheibe bezeichnet. Unter der innenraumseitigen Oberfläche (oder Innenseite oder Innenfläche) wird im Sinne der Erfindung diejenige Oberfläche der Scheiben verstanden, in Einbaulage dem Innenraum zugewandt ist. Unter der außenseitigen Oberfläche (oder Außenseite oder Außenfläche) wird im Sinne der Erfindung diejenige Oberfläche der Scheiben verstanden, in Einbaulage der äußeren Umgebung zugewandt ist.

Die Oberflächen der Glasscheiben werden typischerweise wie folgt bezeichnet: Die Außenseite der Außenscheibe wird als Seite 1 bezeichnet. Die Innenseite der Außenscheibe wird als Seite 2 bezeichnet. Die Außenseite der Innenscheibe wird als Seite 3 bezeichnet. Die Innenseite der Innenscheibe wird als Seite 4 bezeichnet.

Die innenraumseitige Oberfläche der Außenscheibe und die außenseitige Oberfläche der Innenscheibe sind einander zugewandt und mittels der thermoplastischen Zwischenschicht miteinander verbunden.

Die thermoplastische Zwischenschicht ist durch eine oder mehrere thermoplastische Folien ausgebildet. Die thermoplastischen Folien enthalten bevorzugt Polyvinylbutyral (PVB), Ethylenvinylacetat (EVA), Polyurethan (PU) und/oder Gemische davon und/oder Copolymere davon, besonders bevorzugt Polyvinylbutyral. Die Folien sind bevorzugt auf Basis der genannten Materialien ausgebildet, können aber weitere Bestandteile enthalten, beispielsweise Weichmacher, Farbmittel, IR- oder UV-Absorber, bevorzugt mit einem Anteil von kleiner 50%.

Erfindungsgemäß handelt es sich bei der mindestens einen thermoplastischen Polymerfolie, insbesondere bei der mindestens einen PVB-Folie, um eine getönte thermoplastische Polymerfolie, insbesondere eine getönte PVB-Folie, mit einem Lichttransmissionsgrad von 2 bis 80%, vorzugsweise von 5 bis 50% und besonders bevorzugt von 8 bis 36%. Der Einsatz einer getönten thermoplastischen Polymerfolie hat den Vorteil, dass die Lichttransmission, bezogen auf die gesamte Verbundglasscheibe, durch die Wahl der thermoplastischen Polymerfolie vorteilhaft eingestellt werden kann. Zudem kann durch die Kombination von thermoplastischen Polymerfolien mit bestimmten Lichttransmissionsgraden und bestimmten Low-E-Schichten die Reflexion an der Seite 4 der Verbundglasscheibe auf den Bereich von kleiner als 6% eingestellt werden.

Die einzelnen Polymerfolien, insbesondere die PVB-Folien, haben vorzugsweise eine Dicke von etwa 0,2 mm bis 1 mm, beispielsweise 0,38 mm oder 0,76 mm. Über die Dicke der Folien können weitere Eigenschaften der Verbundglasscheibe beeinflusst werden. So bewirken etwa dickere PVB-Folien eine verbesserte Schalldämpfung, insbesondere wenn sie einen akustisch wirksamen Kern enthalten, einen erhöhten Einbruchswiderstand der Verbundglasscheibe und auch einen erhöhten Schutz gegen ultraviolette Strahlung (UV-Schutz).

Die Sonnenschutzbeschichtung (oder Sonnenschutzschicht) ist erfindungsgemäß zwischen der Außenscheibe und der Innenscheibe angeordnet. Die Sonnenschutzbeschichtung ist in einer bevorzugten Ausgestaltung auf der innenraumseitigen Oberfläche der Außenscheibe aufgebracht. In einer weiteren bevorzugten Ausgestaltung ist die Sonnenschutzbeschichtung in die thermoplastische Zwischenschicht eingelagert.

Dazu ist die Sonnenschutzbeschichtung auf einer Trägerfolie aufgebracht, welche zwischen zwei thermoplastischen Folien angeordnet ist. Die Trägerfolie enthält bevorzugt Polyethylenterephthalat (PET) und weist eine Dicke von 20 $\mu m$ bis 100 $\mu m$ auf, beispielsweise etwa 50 $\mu m$. In einer weiteren Ausgestaltung ist die Sonnenschutzbeschichtung auf der außenseitigen Oberfläche der Innenscheibe aufgebracht.

Die Sonnenschutzbeschichtung hat die Aufgabe, Anteile der Sonnenstrahlung insbesondere im Infrarotbereich herauszufiltern. Die Sonnenschutzbeschichtung umfasst mindestens eine dünne transparente metallische Schicht, die zwischen mindestens je einer dielektrischen Schicht eingebettet ist. Als bevorzugtes Metall für die metallische Schicht hat sich Silber durchgesetzt, da es sowohl eine relativ neutrale Farbwirkung besitzt als auch die Infrarotstrahlung außerhalb des sichtbaren Bereiches der Sonnenstrahlung selektiv reflektiert. Die dielektrischen Schichten haben die Aufgabe, über ihre Brechungsindices die optischen Eigenschaften der beschichteten Scheibe zu verbessern und die metallische Funktionsschicht vor Oxidation zu schützen. Solche Sonnenschutzschichten, die beispielsweise mit dem Verfahren des reaktiven Sputterns hergestellt werden können, werden in großem Umfang in Verglasungen für Gebäude, aber auch schon in Kraftfahrzeugen eingesetzt. In den meisten Fällen werden Schichtsysteme mit zwei Silberfunktionsschichten, aber auch drei oder vier Silberfunktionsschichten verwendet, da deren Wirkungsgrad, d.h. die Reflexion der Infrarotstrahlung außerhalb des sichtbaren Bereiches im Verhältnis zu Transmission der sichtbaren Strahlung, größer ist.

Geeignete Sonnenschutzbeschichtungen sind beispielsweise aus der WO2013/104439A1 sowie der DE 19927683C1 bekannt.

Die dielektrischen Schichten sind auf Basis von dielektrischen Oxiden oder Nitriden gebildet, wie ZnO, SnZnO, AIN, SiOs, $TiO_2$ oder $Si_3N_4$.

Alternativ zu den anorganischen, insbesondere silberbasierten Beschichtungen kann die Sonnenschutzbeschichtung auch auf nichtmetallischer, organischer Basis ausgebildet sein. Die Sonnenschutzbeschichtung ist in diesem Fall bevorzugt ein Stapel mehrerer, typischerweise mehrere Hunderte, organischer Schichten mit unterschiedlichen oder alternierenden Brechungsindizes. Der Stapel ist ein doppelbrechender dielektrischer Interferenzstapel, der IR-Strahlung aufgrund von Interferenzeffekten reflektiert. Solche organischen Beschichtungen haben gegenüber metallischen Beschichtungen den Vorteil einer höheren Farbneutralität und einer höheren Lichttransmission. Außerdem stören sie nicht die Übertragung elektromagnetischer Signale. Solche Sonnenschutzbeschichtungen auf PET-Trägerfolien werden beispielsweise von der Firma 3M unter dem Markennamen "Ultra-Clear Solar Film" bereitgestellt.

Erfindungsgemäß ist auf der Innenseite der Innenscheibe (Seite 4) eine die Wärmestrahlen reflektierende Beschichtung aufgebracht. Solche Beschichtungen sind beispielsweise aus der WO2013/131667A1 bekannt. Die Wärmestrahlen reflektierende Beschichtung kann auch als Beschichtung niedriger Emissivität, emissivitätsmindernde Beschichtung, Low-E-Beschichtung oder Low-E-Schicht bezeichnet werden. Sie hat die Aufgabe, Wärmestrahlung zu reflektieren, also insbesondere IR-Strahlung, die längerwellig ist als der IR-Anteil der Sonnenstrahlung. Bei niedrigen Außentemperaturen reflektiert die Low-E-Beschichtung Wärme in den Innenraum zurück und vermindert die Auskühlung des Innenraums. Bei hohen Außentemperaturen reflektiert die Low-E-Beschichtung die thermische Strahlung der erwärmten Verbundscheibe nach außen und vermindert die Aufheizung des Innenraums. Auf der Innenseite der Innenscheibe verringert die erfindungsgemäße Beschichtung besonders effektiv im Sommer die Aussendung von Wärmestrahlung der Scheibe in den Innenraum und im Winter die Abstrahlung von Wärme in die äußere Umgebung.

Die Wärmestrahlen reflektierende Beschichtung umfasst Indiumzinnoxid, mit Antimon oder Fluor dotiertes Zinnoxid und/oder mit Gallium und/oder Aluminium dotiertem Zinkoxid (ZnO: Ga, bzw. ZnO: AI), wobei Indiumzinnoxid bevorzugt ist. Damit werden besonders gute Ergebnisse hinsichtlich der Emissivität und der Biegbarkeit der erfindungsgemäßen Beschichtung erreicht. Der Brechungsindex des Materials der funktionellen Schicht beträgt bevorzugt 1,7 bis 2,5.

Das Indiumzinnoxid wird bevorzugt mittels magnetfeldunterstützter Kathodenzerstäubung mit einem Target aus Indium-Zinn-Oxid abgeschieden. Das Target enthält bevorzugt von 75 Gew.-% bis 95 Gew.-% Indiumoxid und von 5 Gew.-% bis 25 Gew.-% Zinnoxid sowie herstellungsbedingte Beimengungen. Die Abscheidung des Zinn-dotierten Indiumoxids erfolgt bevorzugt unter einer Schutzgasatmosphäre, beispielsweise Argon. Dem Schutzgas kann auch ein geringer Anteil an Sauerstoff zugesetzt werden, beispielsweise um die Homogenität der funktionellen Schicht zu verbessern.

Das Target kann alternativ bevorzugt zumindest von 75 Gew.-% bis 95 Gew.-% Indium und von 5 Gew.-% bis 25 Gew.-% Zinn enthalten. Die Abscheidung des Indiumozinnxids erfolgt dann bevorzugt unter Zugabe von Sauerstoff als Reaktionsgas während der Kathodenzerstäubung.

Die Wärmestrahlen reflektierende Beschichtung umfasst außerdem typischerweise dielektrische Schichten, insbesondere aus dielektrischen Oxiden oder Nitriden gebildet, wie ZnO, SnZnO, AlN, TiOs, SiO$_2$ oder Si$_3$N$_4$. Die Schicht aus reflektierendem leitfähigen Oxid wird durch Verwendung zusätzlicher dielektrischer Schichten oberhalb und unterhalb entspiegelt, um eine ausreichend niedrige Reflexion von der Innenseite zu gewährleisten.

Die Emissivität der erfindungsgemäßen Scheibe kann durch die Dicke der funktionellen Schicht der Wärmestrahlen reflektierenden Beschichtung beeinflusst werden. Die Dicke funktionellen Schicht beträgt bevorzugt 40 nm bis 200 nm, besonders bevorzugt 60 nm bis 150 nm und ganz besonders bevorzugt 65 nm bis 85 nm, beispielsweise etwa 75 nm. In diesem Bereich für die Dicke werden besonders vorteilhafte Werte für die Emissivität und eine besonders vorteilhafte Fähigkeit der die Wärmestrahlen reflektierende Beschichtung, eine mechanische Transformation wie Biegen oder Vorspannen ohne Beschädigung zu überstehen, erreicht.

Die innenraumseitige Emissivität der erfindungsgemäßen Verbundscheibe beträgt bevorzugt kleiner oder gleich 50%, besonders bevorzugt von 10% bis 50%, ganz besonders bevorzugt von 20% bis 35%. Mit innenraumseitiger Emissivität wird dabei das Maß bezeichnet, welches angibt, wie viel Wärmestrahlung die Scheibe in Einbaulage im Vergleich zu einem idealen Wärmestrahler (einem schwarzen Körper) in einen Innenraum, beispielsweise eines Gebäudes oder eines Fahrzeugs abgibt. Unter Emissivität wird im Sinne der Erfindung der normale Emissionsgrad bei 283 K nach der Norm EN 12898 verstanden.

Die erfindungsgemäße Verbundscheibe ist ferner vorzugsweise dadurch gekennzeichnet, dass die Innenscheibe zusammen mit der darauf aufgebrachten Wärmestrahlen reflektierenden Beschichtung (Low-E-Schicht) einen Lichttransmissionsgrad von 25 % bis 95 % aufweist.

Die Außenscheibe und die Innenscheibe sind bevorzugt unabhängig voneinander aus Glas oder Kunststoff gebildet, bevorzugt Kalk-Natron-Glas, Alkalialuminosilikatglas, Polycarbonat oder Polymethacrylat. In einer besonders bevorzugten Ausgestaltung bestehen die Außenscheibe und die Innenscheibe aus Glas.

Geeignete Glasscheiben umfassen Glasscheiben, die unter den Handelsnamen VG10, VG20, VG40 oder TSANx, TSA3+, TSA4+ von Saint-Gobain bekannt sind, wobei es sich bei den Gläsern der VG-Serie um graugefärbte Gläser und bei denen der TSA-Serie um grüngefärbte Gläser handelt.

Die Außenscheibe weist eine Dicke von 0,1 bis 4 mm, bevorzugt von 1 bis 4 mm, besonders bevorzugt von 1,6 mm bis etwa 2,1 mm auf. Die Innenscheibe weist eine Dicke von 1,6 mm bis 2,1 mm auf.

Die erfindungsgemäße Verbundscheibe weist einen Lichttransmissionsgrad von 1 % bis 12%, bevorzugt von 2% bis 10%, auf (gemessen nach ISO 9050).

Die Innenscheibe mit der darauf aufgebrachten Wärmestrahlen reflektierenden Beschichtung (Low-E-Schicht) weist eine Lichtreflexion (RL) unter 8° von weniger als 6%, besonders bevorzugt von weniger als 4,0% (gemessen nach ISO 9050), auf. Gemeint ist damit die Lichtreflexion der beschichteten Innenscheibe als Teil der Verbundscheibe - anders ausgedrückt die innenraumseitige Lichtreflexion der Verbundscheibe, also die Lichtreflexion an der von der Außenscheibe abgewandten Oberfläche der Innenscheibe.

Der Transmissionsindex A wird idealerweise in Abhängigkeit von der Lichttransmission der Zwischenschicht eingestellt, um optimale Eigenschaften zu erreichen. Bevorzugt liegt der Transmissionsindex A in einem Bereich von 0,07 bis 0,08 bei einem Lichttransmissionsgrad der Zwischenschicht von größer als 30%, bevorzugt von 30% bis 50%. In einer besonders vorteilhaften Ausgestaltung weist die Verbundscheibe einen Transmissionsindex von 0,07 bis 0,08 auf, wobei der Lichttransmissionsgrad der Zwischenschicht von 8 % bis 36% beträgt. Damit werden besonders gute Ergebnisse erzielt.

In einer vorteilhaften Weiterbildung der Erfindung ist in die thermoplastische Zwischenschicht ein Funktionselement mit elektrisch steuerbaren optischen Eigenschaften eingelagert. Dadurch kann die Durchsicht durch die Verbundscheibe elektrisch gesteuert werden, insbesondere zwischen einem klaren, durchsichtigen Zustand und einem Zustand verminderter Transmission. Die angegebenen Werte für die Lichttransmission der Verbundscheibe beziehungsweise der Zwischenschicht beziehen sich dabei immer auf die Verbundscheibe mit dem Funktionselement im klaren, durchsichtigen Zustand.

Solche Funktionselemente werden typischerweise in Kombination mit Sonnenschutzbeschichtungen verwendet, um die Funktionselemente vor schädlicher IR-Strahlung zu schützen. Die erfindungsgemäße Verbundscheibe mit der verminderten innenraumseitigen Reflexion entfaltet ihre Vorteile in besonderem Maße in Kombination mit einem elektrisch steuerbaren Funktionselement: die unerwünschte innenraumseitige Reflexion würde insbesondere im auf Durchsicht geschalteten Zustand als störend empfunden werden, da gerade in diesem Zustand ein unbeeinträchtigter Blick nach außen gewünscht ist.

Das Funktionselement ist zwischen mindestens zwei Schichten von thermoplastischem Material der Zwischenschicht angeordnet, insbesondere zwischen zwei Polymerfolien, wobei es durch die erste Schicht mit der Außenscheibe und durch die zweite Schicht mit der Innenscheibe verbunden ist. Bevorzugt ist die Seitenkante des Funktionselements vollständig von der Zwischenschicht umgeben, so dass sich das Funktionselement nicht bis zur Seitenkante der Verbundscheibe erstreckt und somit keinen Kontakt zur umgebenden Atmosphäre hat. Um die Dicke des Funktionselements im Randbereich zu kompensieren, kann das Funktionselement in einer Aussparung einer dritten Schicht von thermoplastischem Material eingesetzt sein.

Das Funktionselement umfasst mindestens eine aktive Schicht, die zwischen einer ersten Trägerfolie und einer zweiten Trägerfolie angeordnet ist. Die aktive Schicht weist die veränderlichen optischen Eigenschaften auf, die durch eine an die aktive Schicht angelegte elektrische Spannung gesteuert werden können. Unter elektrisch steuerbaren optischen Eigenschaften werden im Sinne der Erfindung solche Eigenschaften verstanden, die stufenlos steuerbar sind, aber gleichermaßen auch solche, die zwischen zwei oder mehr diskreten Zuständen geschaltet werden können. Die besagten optischen Eigenschaften betreffen insbesondere die Lichttransmission und/oder das Streuverhalten. Das Funktionselement umfasst außerdem Flächenelektroden zum Anlegen der Spannung an die aktive Schicht, die bevorzugt zwischen den Trägerfolien und der aktiven Schicht angeordnet sind.

In einer bevorzugten Ausgestaltung ist das Funktionselement ein PDLC-Funktionselement (*polymer dispersed liquid crystal*). Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht.

In einer weiteren bevorzugten Ausgestaltung ist das Funktionselement ein SPD-Funktionselement (*suspended particle device*). Dabei enthält die aktive Schicht suspendierte Partikel, wobei die Absorption von Licht durch die aktive Schicht mittels Anlegen einer Spannung an die Flächenelektroden veränderbar ist. Grundsätzlich ist es aber auch möglich, andere Arten von regelbaren Funktionselementen einzusetzen, beispielweise elektrochrome Funktionselemente. Die erwähnten regelbaren Funktionselemente und deren Funktionsweise sind dem Fachmann an sich bekannt, so dass an dieser Stelle auf eine ausführliche Beschreibung verzichtet werden kann.

Die Flächenelektroden sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (transparent conducting oxide, TCO). Die Flächenelektroden können beispielsweise Silber, Gold, Kupfer, Nickel, Chrom, Wolfram, Indium-Zinnoxid (ITO), Gallium-dotiertes oder Aluminium-dotiertes Zinkoxid und / oder Fluor-dotiertes oder Antimon-dotiertes Zinnoxid enthalten. Die Flächenelektroden weisen bevorzugt eine Dicke von 10 nm bis 2 μm auf, besonders bevorzugt von 20 nm bis 1 μm, ganz besonders bevorzugt von 30 nm bis 500 nm.

Das Funktionselement liegt insbesondere als Mehrschichtfolie mit zwei äußeren Trägerfolien vor. Bei einer solchen Mehrschichtfolie sind die Flächenelektroden und die aktive Schicht typischerweise zwischen den beiden Trägerfolien angeordnet. Mit äußerer Trägerfolie ist hier gemeint, dass die Trägerfolien die beiden Oberflächen der Mehrschichtfolie ausbilden. Das Funktionselement kann dadurch als laminierte Folie bereitgestellt werden, die vorteilhaft verarbeitet werden kann. Das Funktionselement ist durch die Trägerfolien vorteilhaft vor Beschädigung, insbesondere Korrosion geschützt. Die Mehrschichtfolie enthält in der angegebenen Reihenfolge zumindest eine Trägerfolie, eine Flächenelektrode, eine aktive Schicht, eine weitere Flächenelektrode und eine weitere Trägerfolie. Typischerweise weisen die Trägerfolien jeweils eine elektrisch leitfähige Beschichtung auf, die der aktiven Schicht zugewandt ist und als Flächenelektrode fungiert. Der Trägerfolien enthalten typischerweise PET und weisen eine Dicke von 0,1 mm bis 1 mm, insbesondere von 0,1 mm bis 0,2 mm auf.

Die vorliegende Erfindung betrifft zudem die Verwendung der erfindungsgemäßen Verbundscheibe in einem Fahrzeug, bevorzugt als Dachscheibe eines Fahrzeugs, besonders bevorzugt als Dachscheibe eines Kraftfahrzeugs, insbesondere Personenkraftwagens.

Im Folgenden wird die Erfindung anhand einer Zeichnung und Ausführungsbeispielen näher erläutert. Die Zeichnung ist eine schematische Darstellung und nicht maßstabsgetreu.

Es zeigen:

Fig. 1     einen Querschnitt durch eine Ausgestaltung der erfindungsgemäßen Verbundscheibe,

Fig. 2     ein Diagramm des Reflexionsgrads einer Ausgestaltung der erfindungsgemäßen Verbundscheibe in Abhängigkeit von der Lichttransmission der Zwischenschicht.

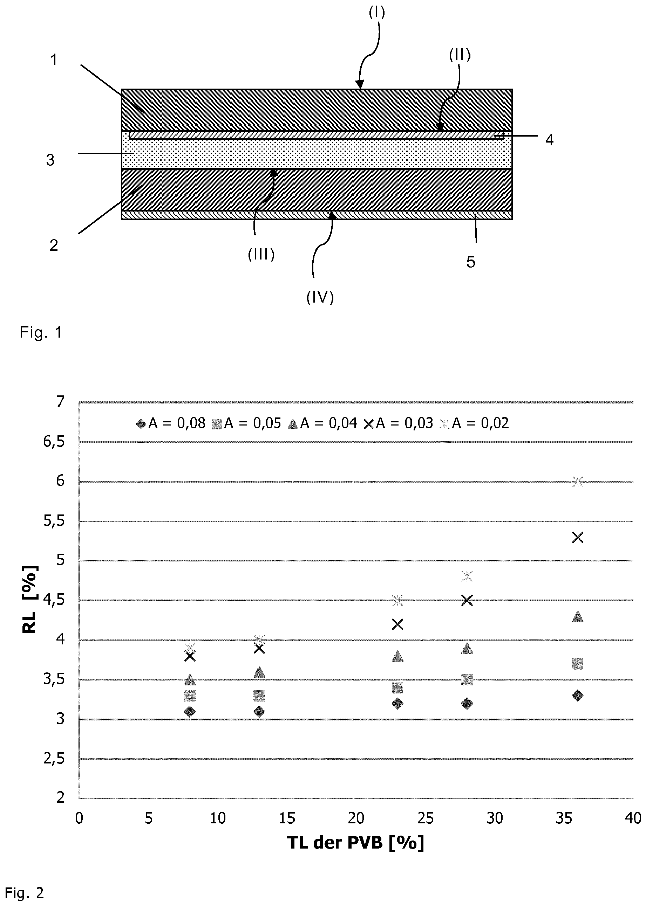

Fig. 1 zeigt einen Querschnitt durch eine Ausgestaltung der erfindungsgemäßen Verbundscheibe. Die Verbundscheibe umfasst eine Außenscheibe 1 und eine Innenscheibe 2, die über eine thermoplastische Zwischenschicht 3 miteinander verbunden sind. Die Verbundscheibe weist eine Größe von etwa 1 m$^2$ auf und ist als Dachscheibe eines Personenkraftwagens vorgesehen, wobei die Außenscheibe 1 dafür vorgesehen ist, der äußeren Umgebung zugewandt zu sein, und die Innenscheibe 2 dafür vorgesehen ist, dem Fahrzeuginnenraum zugewandt zu sein. Die Außenscheibe 1 weist eine außenseitige Oberfläche I und eine innenraumseitige Oberfläche II auf. Die Innenscheibe 2 weist eine außenseitige Oberfläche III und eine innenraumseitige Oberfläche IV auf. Die außenseitige Oberfläche I und III sind in Einbaulage der äußeren Umgebung zugewandt, die eine innenraumseitigen Oberflächen II und IV sind in Einbaulage dem Fahrzeuginnenraum zugewandt. Die innenraumseitige Oberfläche II der Außenscheibe 1 und die außenseitige Oberfläche III der Innenscheibe 2 sind einander zugewandt. Die Außenscheibe 1 und die Innenscheibe 2 enthalten Natron-Kalk-Glas und weisen jeweils eine Dicke von 2,1 mm auf. Die thermoplastische Zwischenschicht 3 enthält oder besteht aus Polyvinylbutyral (PVB) und weist eine Dicke von 0,76 mm auf.

Auf der innenraumseitige Oberfläche II der Außenscheibe 1 ist eine Sonnenschutzbeschichtung 4 angeordnet. Die Sonnenschutzbeschichtung 4 erstreckt sich über die gesamte Oberfläche II abzüglich eines umlaufenden rahmenförmigen beschichtungsfreien Bereichs mit einer Breite von 8 mm. Der beschichtungsfreie Bereich ist durch Verkleben mit der thermoplastischen Zwischenschicht 3 hermetisch versiegelt. Die Sonnenschutzbeschichtung 4 ist dadurch vorteilhaft vor Beschädigungen und Korrosion geschützt. Die Sonnenschutzbeschichtung 4 umfasst beispielsweise zumindest zwei funktionelle Schichten, welche zumindest Silber enthalten oder aus Silber bestehen und eine Schichtdicke zwischen 10 nm und 20 nm aufweisen, wobei jede funktionelle Schicht zwischen zwei dielektrischen Schichten aus Siliziumnitrid mit einer Dicke von 40 nm bis 70 nm angeordnet ist.

Auf der innenraumseitige Oberfläche IV der Innenscheibe 2 ist eine Wärmestrahlen reflektierende Beschichtung 5 angeordnet. Die Beschichtung 5 umfasst eine funktionelle ITO-Schicht mit einer Dicke von 60 nm bis 150 nm. Die Beschichtung 5 umfasst außerdem weitere dielektrische Schichten ober- und unterhalb der funktionellen Schicht, insbesondere aus Al-dotiertem $SiO_2$ und $Si_3N_4$.

Die Sonnenschutzbeschichtung 4 führt zu einer verringerten Aufheizung des Fahrzeuginnenraums und der Innenscheibe 2 aufgrund der Reflexion von infraroter Strahlung. Die Wärmestrahlen reflektierende Beschichtung 5 verringert einerseits die Abstrahlung von Wärmestrahlung durch die Verbundscheibe in den Fahrzeuginnenraum, insbesondere bei hohen Außentemperaturen. Wärmestrahlen reflektierende Beschichtung 5 verringert andererseits die Abstrahlung von Wärmestrahlung aus dem Fahrzeuginnenraum bei niedrigen Außentemperaturen.

Fig. 2 zeigt die Lichtreflektion der reflektierenden Beschichtung (Low-E-Schicht) bestimmter Verbundglasscheiben mit unterschiedlichen Werten für den Transmissionsindex A in Abhängigkeit des Lichttransmissionsgrades der aus PVB gebildet Zwischenschicht 3. Das Diagramm wird im Zusammenhang mit dem Beispiel diskutiert.

Die Erfindung wird nachfolgend anhand von nicht beschränkenden Ausführungsbeispiels unter Bezug auf die beigefügte Figur näher erläutert.

Beispiel:

Tabelle 1

|  | TL [%] IRR-Glas | TL [%] PVB | TL [%] LowE-Glas | TL [%] Produkt | RL [%] Seite 4 | A |
|---|---|---|---|---|---|---|
| a) | 76 | 36 | 27,2[a] | 9,9 | 3,3 | 0,08 |
|  | 76 | 8 | 27[a] | 2,2 | 3,1 | 0,08 |
| b) | 76 | 28 | 39,5[b] | 11 | 3,5 | 0,05 |
|  | 76 | 8 | 39,5[b] | 3,2 | 3,3 | 0,05 |
| c) | 76 | 23 | 54,5[c] | 12 | 3,8 | 0,04 |
|  | 76 | 8 | 54,5[c] | 4,4 | 3,5 | 0,04 |
| d) | 76 | 13 | 76,9[d] | 10 | 3,9 | 0,03 |
|  | 76 | 8 | 76,9[d] | 6,3 | 3,8 | 0,03 |
| e) | 76 | 8 | 91,3[e] | 7,4 | 3,9 | 0,02 |
|  | 76 | 8 | 91,3[e] | 7,4 | 3,9 | 0,02 |

Es bedeuten:

IRR-Glas: Außenscheibe 1 mit Sonnenschutzbeschichtung 4
PLC 2,1 mm Glasscheibe (Saint-Gobain) mit Sonnenschutzbeschichtung 4, umfassend drei funktionelle Silberschichten
PVB: Zwischenschicht 3
Getönte PVB-Folie mit unterschiedlichen TL
LowE-Glas: Innenscheibe 2 mit Wärmestrahlen reflektierender Beschichtung 5
Glasscheiben (Saint-Gobain) mit unterschiedlicher Lichttransmission, jeweils mit Wärmestrahlen reflektierender Beschichtung 5, umfassend eine funktionelle ITO-Schicht

a) VG10 Glas, 2,1 mm
b) VG20 Glas, 2,1 mm

c) VG 40 Glas, 2,1 mm
d) TSA4+ Glas, 2,1 mm
e) PLC Glas, 2,1 mm

Produkt: Gesamte Verbundscheibe
RL Seite 4: Reflexion, wie vorstehend definiert
A: Transmissionsindex, wie vorstehend definiert

Es zeigt sich, dass durch die in Tabelle 1 aufgeführten Kombinationen die vorteilhafte Reflexion von kleiner 6%, bevorzugt von kleiner 4% erreicht werden kann. Zudem zeigt sich, dass bei hohen Transmissionindices von 0,05 bis 0,08 eine hohe Variabilität in Transmissionsgraden der verwendeten PVB-Folien möglich ist, ohne dass die RL auf Seite 4 wesentlich beeinträchtigt wird. Je kleiner der Transmissionsindex, umso geringer ist die Variabilität in Transmissionsgraden der verwendeten PVB-Folien ohne, dass die RL auf Seite 4 den bevorzugten Bereich verlässt.

Dies ist auch aus Figur 2 ersichtlich.

Eine Verbundscheibe mit dunklem VG10 2,1 mm Glas weist einen Transmissionsindex A von 0,08 auf (rautenförmiges Symbol in Fig.1). Eine Verbundscheibe mit höherem PLC 2,1 mm Glas weist einen Transmissionsindex A von 0,02 auf (kreuzförmiges Symbol, bestehend aus drei Linien, in Fig. 1).

Fig. 2 zeigt, dass mit zunehmendem Lichttransmissionsgrad der Zwischenschicht 3 die Lichtreflektion der reflektierenden Beschichtung (Low-E-Schicht) aller Verbundglasscheiben mit den unterschiedlichen Werten für den Transmissionsindex A steigt. Für Verbundglasscheiben mit höherem Transmissionsindex A, z.B. 0,08, steigt die Zunahme der Lichtreflektion der reflektierenden Beschichtung (Low-E-Schicht) mit zunehmendem Lichttransmissionsgrad der Zwischenschicht 3 langsamer an als für jene mit geringem Transmissionsindex A, z.B. 0,02.

Vergleichsbeispiel:

Tabelle 2

|  | TL [%] IRR-Glas | TL [%] PVB | TL [%] LowE-Glas | TL [%] Produkt | RL [%] Seite 4 | A |
|---|---|---|---|---|---|---|
| a) | 76 | 36 | 10 | 3,5 | 3,1 | 0,22 |

Das Vergleichsbeispiel unterscheidet sich vom Beispiel a, Variante mit 36% TL der Zwischenschicht, lediglich dadurch, dass die Dicke der Innenscheibe aus VG10-Glass 3,9 mm statt 2,1 mm betrug. Es ist zu erkennen, dass der Transmissionsindex A hierbei deutlich außerhalb des angestrebten Bereichs liegt. Ein ähnliches Ergebnis ist zu erwarten, wenn der Tönungsgrad der Innenscheibe erhöht würde statt ihrer Dicke.

Bezugszeichenliste:

(1) Außenscheibe
(2) Innenscheibe
(3) thermoplastische Zwischenschicht
(4) Sonnenschutzbeschichtung
(5) Wärmestrahlen reflektierende Beschichtung / Low-E-Beschichtung
(I) außenseitige Oberfläche (Außenfläche) von (1)
(II) innenraumseitige Oberfläche (Innenfläche) von (1)
(III) außenseitige Oberfläche (Außenfläche) von (2)
(IV) innenraumseitige Oberfläche (Innenfläche) von (2)

**Patentansprüche**

1. Verbundscheibe, umfassend eine Außenscheibe (1) mit einer außenseitigen Oberfläche (I) und einer innenraumseitigen Oberfläche (II), eine Innenscheibe (2) mit einer außenseitigen Oberfläche (III) und einer innenraumseitigen Oberfläche (IV) und eine thermoplastische Zwischenschicht (3), welche die innenraumseitige Oberfläche (II) der Außenscheibe (1) mit der außenseitigen Oberfläche (III) der Innenscheibe (2) verbindet,

wobei die Innenscheibe (2) eine Dicke von 1,6 mm bis 2,1 mm aufweist,
wobei die Verbundscheibe zwischen der Außenscheibe (1) und der Innenscheibe (2) mindestens eine Sonnenschutzbeschichtung (4) aufweist, welche im Wesentlichen Strahlen außerhalb des sichtbaren Spektrums der Sonnenstrahlung, insbesondere Infrarotstrahlen, reflektiert oder absorbiert, und
wobei die Verbundscheibe auf der innenraumseitigen Oberfläche (IV) der Innenscheibe (2) eine Wärmestrahlen reflektierende Beschichtung (5) aufweist, wobei

- die Sonnenschutzbeschichtung (4) ein Schichtsystem mit mindestens einer zwischen dielektrischen Oxid- oder Nitridschichten eingebetteten Metallschicht umfasst
- die Wärmestrahlen reflektierende Beschichtung (5) ein transparentes leitfähiges Oxid enthält, wobei die Wärmestrahlen reflektierende Beschichtung (5) Indiumzinnoxid, mit Antimon oder Fluor dotiertes Zinnoxid und/oder mit Aluminium dotierte Zinkoxid (ZnO:Al) und/oder Gallium dotiertes Zinkoxid (ZnO:Ga) enthält,
- wobei die thermoplastische Zwischenschicht (3) aus mindestens einer getönten thermoplastischen Polymerfolie gebildet ist, welche einen Lichttransmissionsgrad von 2 % bis 80% aufweist,
- wobei $TL_{Verbundglasscheibe}$ die Lichttransmission durch die gesamte Verbundscheibe und $TL_{LowE-beschichtete\ Scheibe}$ die Lichttransmission durch die Innenscheibe (2) samt Wärmestrahlen reflektierender Beschichtung (5) bezeichnet, wobei
- durch eine Wahl der Tönung der Bestandteile der Verbundscheibe, also der Innenscheibe (2), der Außenscheibe (1) und der Zwischenschicht (3), die TL-Werte so eingestellt sind, dass
- die Verbundscheibe einen Lichttransmissionsgrad $TL_{Verbundglasscheibe}$ von 1 % bis 12% aufweist und
- die Verbundscheibe einen Transmissionsindex A von 0,06 bis 0,08 aufweist, wobei der Transmissionsindex A nach der folgenden Formel (I) bestimmt wird

$$A = TL_{Verbundglasscheibe}/(TL_{LowE-beschichtete\ Scheibe} * TE) \qquad (I),$$

wobei TL der Lichttransmissionsgrad und TE die Energietransmission gemessen nach ISO 9050 ist,
wobei die Lichtreflexion der Verbundscheibe an der innenraumseitigen Oberfläche (IV) der Innenscheibe (2) unter einem Winkel von 8° weniger als 6% beträgt, gemessen nach ISO 9050.

2. Verbundscheibe nach Anspruch 1, wobei die eingebettete Metallschicht der Sonnenschutzbeschichtung (4) eine metallische Silberschicht ist.

3. Verbundscheibe nach einem der Ansprüche 1 bis 2, wobei die Sonnenschutzbeschichtung (4) direkt auf die innenraumseitige Oberfläche (II) der Außenscheibe (1) aufgebracht ist.

4. Verbundscheibe nach einem der Ansprüche 1 bis 2, wobei die Sonnenschutzbeschichtung (4) auf einer in die Zwischenschicht (3) eingelagerten Trägerfolie angeordnet ist.

5. Verbundscheibe nach einem der Ansprüche 1 bis 4, wobei die thermoplastische Zwischenschicht (3) Polyvinylbutyral, Ethylenvinylacetat, Polyurethan und/oder Gemische davon und/oder Copolymere davon enthält, bevorzugt Polyvinylbutyral.

6. Verbundscheibe nach Anspruch 5, wobei die mindestens eine Polymerfolie einen Lichttransmissionsgrad von 5 bis 50%, bevorzugt von 8 bis 36% aufweist.

7. Verbundscheibe nach einem der Ansprüche 1 bis 6, wobei die Innenscheibe (2) zusammen mit der darauf aufgebrachten Wärmestrahlen reflektierenden Beschichtung (5) einen Lichttransmissionsgrad $TL_{LowE-beschichtete\ Scheibe}$ von 25 % bis 95 % aufweist.

8. Verbundscheibe nach einem der Ansprüche 1 bis 7, die einen Lichttransmissionsgrad $TL_{Verbundglasscheibe}$ von 2% bis 10%, aufweist.

9. Verbundscheibe nach einem der Ansprüche 1 bis 8, wobei die Innenscheibe (2) mit der darauf aufgebrachten Wärmestrahlen reflektierenden Beschichtung (5) eine Lichtreflexion unter einem Winkel von 8° von weniger als 4,0% aufweist.

10. Verbundscheibe nach einem der Ansprüche 1 bis 9, wobei der Transmissionsindex A bei einem Lichttransmissionsgrad der Zwischenschicht (3) von größer als 30%, bevorzugt von 30% bis 50%, in einem Bereich von 0,07 bis 0,08 liegt.

11. Verbundscheibe nach einem der Ansprüche 1 bis 10, wobei die Außenscheibe (1) eine Dicke von 0,5 mm bis 4 mm, bevorzugt von 1,6 mm bis 2,1 mm, aufweist.

12. Verbundscheibe nach einem der Ansprüche 1 bis 11, wobei in die Zwischenschicht (3) ein Funktionselement mit elektrisch steuerbaren optischen Eigenschaften eingelagert ist, insbesondere ein PDLC-Element oder ein SPD-Element.

13. Verwendung der Verbundscheibe nach einem der Ansprüche 1 bis 12 als Dachscheibe eines Fahrzeugs.

**Claims**

1. Composite pane, comprising an outer pane (1) having an outer-side surface (I) and an interior-side surface (II), an inner pane (2) having an outer-side surface (III) and an interior-side surface (IV), and a thermoplastic intermediate layer (3), which joins the interior-side surface (II) of the outer pane (1) to the outer-side surface (III) of the inner pane (2),

    wherein the inner pane (2) has a thickness of 1.6 mm to 2.1 mm,
    wherein the composite pane has, between the outer pane (1) and the inner pane (2), at least one sun protection coating (4), which substantially reflects or absorbs rays outside the visible spectrum of solar radiation, in particular infrared rays, and wherein the composite pane has, on the interior-side surface (IV) of the inner pane (2), a thermal-radiation-reflecting coating (5),
    wherein

    - the sun protection coating (4) comprises a layer system with at least one metal layer embedded between dielectric oxide or nitride layers,
    - the thermal-radiation-reflecting coating (5) contains a transparent conductive oxide, wherein the thermal-radiation-reflecting coating (5) contains indium tin oxide, antimony-doped or fluorine-doped tin oxide and/or aluminum-doped zinc oxide (ZnO:Al) and/or gallium-doped zinc oxide (ZnO:Ga),
    - wherein the intermediate layer (3) is formed from at least one tinted thermoplastic polymer film, which has light transmittance of 2% to 80%,
    - wherein "$TL_{composite\ glass\ pane}$" refers to the light transmittance through the entire composite pane and "$TL_{low\text{-}E\text{-}coated\ pane}$" refers to the light transmittance through the inner pane together with the thermal-radiation-reflecting coating, wherein
    - through the selection of the tinting of the components of the composite pane, i.e., the inner pane, the outer pane, and the intermediate layer, the TL values are adjusted such that
    - the composite pane has light transmittance $TL_{composite\ glass\ pane}$ of 1% to 12%, and
    - the composite pane has a transmittance index A of 0.06 to 0.08, wherein the transmittance index A is determined according to the following formula (I)

$$A = TL_{composite\ glass\ pane}/(TL_{low\text{-}E\text{-}coated\ pane} * TE) \qquad (I),$$

    where TL is the light transmittance and TE is the energy transmittance measured according to ISO 9050, wherein the light reflectance of the composite pane at the interior-side surface (IV) of the inner pane (2) at an angle of 8° is less than 6%, measured according to ISO 9050.

2. Composite pane according to claim 1, wherein the embedded metal layer of the sun protection coating (4) is a metallic silver layer.

3. Composite pane according to one of claims 1 through 2, wherein the sun protection coating (4) is applied directly to the interior-side surface (II) of the outer pane (1).

4. Composite pane according to one of claims 1 through 2, wherein the sun protection coating (4) is arranged on a carrier film embedded in the intermediate layer (3).

5. Composite pane according to one of claims 1 through 4, wherein the thermoplastic intermediate layer (3) contains polyvinyl butyral, ethylene vinyl acetate, polyurethane, and/or mixtures thereof and/or copolymers thereof, preferably polyvinyl butyral.

6. Composite pane according to claim 5, wherein the at least one polymer film has light transmittance of 5 to 50%, preferably of 8 to 36%.

7. Composite pane according to one of claims 1 through 6, wherein the inner pane (2) together with the thermal-radiation-reflecting coating (5) applied thereto has light transmittance $TL_{low\text{-}E\text{-}coated\ pane}$ of 25% to 95%.

8. Composite pane according to one of claims 1 through 7, which has light transmittance $TL_{composite\ glass\ pane}$ of 2% to 10%.

9. Composite pane according to one of claims 1 through 8, wherein the inner pane (2) with the thermal-radiation-reflecting coating (5) applied thereto has light reflectance at an angle of 8° of less than 4.0%.

10. Composite pane according to one of claims 1 through 9, wherein the transmittance index A with light transmittance of the intermediate layer (3) of more than 30%, preferably from 30% to 50%, is in a range from 0.07 to 0.08.

11. Composite pane according to one of claims 1 through 10, wherein the outer pane (1) has a thickness of 0.5 mm to 4 mm, preferably of 1.6 mm to 2.1 mm.

12. Composite pane according to one of claims 1 through 11, wherein a functional element with electrically controllable optical properties, in particular a PDLC element or an SPD element, is embedded in the intermediate layer (3).

13. Use of the composite pane according to one of claims 1 through 12 as a roof panel of a vehicle.


**Revendications**

1. Vitrage composite, comprenant un vitre extérieur (1) ayant une surface côté extérieur (I) et une surface côté intérieur (II), un vitre intérieur (2) ayant une surface côté extérieur (III) et une surface côté intérieur (IV), et une couche intermédiaire thermoplastique (3), qui relie la surface côté intérieur (II) du vitre extérieur (1) à la surface côté extérieur (III) du vitre intérieur (2),

dans lequel le vitre intérieur (2) a une épaisseur comprise entre 1,6 mm et 2,1 mm,
dans lequel le vitrage composite comporte, entre le vitre extérieur (1) et le vitre intérieur (2), au moins un revêtement de protection solaire (4) qui réfléchit ou absorbe sensiblement les rayons en dehors du spectre visible du rayonnement solaire, en particulier les rayons infrarouges, et
dans lequel le vitrage composite comporte, sur la surface côté intérieure (IV) du vitre intérieur (2), un revêtement réfléchissant le rayonnement thermique (5),
dans lequel

- le revêtement de protection solaire (4) comprend un système de couches avec au moins une couche métallique intégrée entre des couches d'oxyde ou de nitrure diélectriques,
- le revêtement réfléchissant le rayonnement thermique (5) contient un oxyde conducteur transparent, dans lequel le revêtement réfléchissant le rayonnement thermique (5) contient de l'oxyde d'étain indium, de l'oxyde d'étain dopé à l'antimoine ou au fluor et/ou de l'oxyde de zinc dopé à l'aluminium (ZnO:AI) et/ou de l'oxyde de zinc dopé au gallium (ZnO:Ga),
- dans lequel la couche intermédiaire (3) est formée d'au moins un film polymère thermoplastique teinté, dont la transmission lumineuse est comprise entre 2 % et 80 %,
- dans lequel "$TL_{vitrage\ composite}$" fait référence à la transmission lumineuse à travers l'ensemble du vitrage composite et "$TL_{vitre\ à\ revêtement\ low\text{-}E}$" fait référence à la transmission lumineuse à travers le vitrage intérieur avec le revêtement réfléchissant les radiations thermiques, dans lequel
- par la sélection de la teinte des composants du vitrage composite, c'est-à-dire le vitre intérieur, le vitre extérieur et la couche intermédiaire, les valeurs TL sont ajustées de manière à ce que
- le vitrage composite ait un coefficient de transmission lumineuse $TL_{vitrage\ composite}$ compris entre 1 % et 12 %, et

- le vitrage composite ait un indice de transmission A compris entre 0,06 et 0,08, l'indice de transmission A étant déterminé selon la formule suivante (I)

$$A = TL_{\text{vitre composite}}/(TL_{\text{vitre à revêtement low-E}} * TE) \ (I),$$

où TL est le facteur de transmission de la lumière et TE le facteur de transmission de l'énergie mesuré conformément à la norme ISO 9050,
dans lequel le facteur de réflexion de la lumière du vitrage composite sur la surface intérieure (IV) de la vitre intérieure (2) sous un angle de 8° est inférieur à 6 %, mesuré conformément à la norme ISO 9050.

2. Vitrage composite selon la revendication 1, dans lequel la couche métallique intégrée du revêtement de protection solaire (4) est une couche d'argent métallique.

3. Vitrage composite selon l'une des revendications 1 à 2, dans lequel le revêtement de protection solaire (4) est appliqué directement sur la surface intérieure (II) du vitrage extérieur (1).

4. Vitrage composite selon l'une des revendications 1 à 2, dans lequel le revêtement de protection solaire (4) est disposé sur un film support intégré dans la couche intermédiaire (3).

5. Vitrage composite selon l'une des revendications 1 à 4, dans lequel la couche intermédiaire thermoplastique (3) contient du butyral de polyvinyle, de l'éthylène-acétate de vinyle, du polyuréthane, et/ou des mélanges de ceux-ci et/ou des copolymères de ceux-ci, de préférence du butyral de polyvinyle.

6. Vitrage composite selon la revendication 5, dans lequel le film polymère au moins a une transmission lumineuse de 5 à 50 %, de préférence de 8 à 36 %.

7. Vitrage composite selon l'une des revendications 1 à 6, dans lequel le vitrage intérieur (2) et le revêtement réfléchissant le rayonnement thermique (5) qui lui est appliqué ont un coefficient de transmission lumineuse $TL_{\text{vitre à revêtement low-E}}$ de 25 % à 95 %.

8. Vitrage composite selon l'une des revendications 1 à 7, dont le coefficient de transmission lumineuse $TL_{\text{vitre composite}}$ est compris entre 2 % et 10 %.

9. Vitrage composite selon l'une des revendications 1 à 8, dans lequel le vitrage intérieur (2) sur lequel est appliqué le revêtement réfléchissant le rayonnement thermique (5) présente un facteur de réflexion de la lumière à un angle de 8° inférieur à 4,0 %.

10. Vitrage composite selon l'une des revendications 1 à 9, dans lequel l'indice de transmission A avec une transmission lumineuse de la couche intermédiaire (3) de plus de 30 %, de préférence de 30 % à 50 %, est compris entre 0,07 et 0,08.

11. Vitrage composite selon l'une des revendications 1 à 10, dans lequel le vitrage extérieur (1) a une épaisseur de 0,5 mm à 4 mm, de préférence de 1,6 mm à 2,1 mm.

12. Vitrage composite selon l'une des revendications 1 à 11, dans lequel un élément fonctionnel aux propriétés optiques contrôlables électriquement, en particulier un élément PDLC ou un élément SPD, est incorporé dans la couche intermédiaire (3).

13. Utilisation de la vitrage composite selon l'une des revendications 1 à 12 comme panneau de toit d'un véhicule.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19927683 C1
- WO 2013127563 A1
- US 2015165965 A1
- US 2015151675 A1
- EP 2090428 A1
- WO 2013104439 A1
- WO 2013131667 A1